(19)

Europäisches
Patentamt
European
Patent Office
Office européen
des brevets

(11) **EP 1 818 559 B1**

(12) **EUROPEAN PATENT SPECIFICATION**

(45) Date of publication and mention
of the grant of the patent:
**13.06.2012 Bulletin 2012/24**

(51) Int Cl.:
**F16D 48/06** *(2006.01)*

(21) Application number: **07250518.3**

(22) Date of filing: **08.02.2007**

(54) **Control device and control method for automatic clutch**

Steuerungsvorrichtung und Steuerungsverfahren für eine automatische Kupplung

Dispositif et procédés de commande pour embrayage automatique

(84) Designated Contracting States:
**DE FR GB IT**

(30) Priority: **10.02.2006 JP 2006034396**

(43) Date of publication of application:
**15.08.2007 Bulletin 2007/33**

(73) Proprietor: **Toyota Jidosha Kabushiki Kaisha
Toyota-shi, Aichi-ken, 471-8571 (JP)**

(72) Inventor: **Ido, Daisuke
Toyota-shi
Aichi-ken 471-8571 (JP)**

(74) Representative: **Albutt, Anthony John
D Young & Co LLP
120 Holborn
London EC1N 2DY (GB)**

(56) References cited:
**WO-A-2007/022889     JP-A- 59 212 529
US-A- 4 591 038     US-A- 4 629 045**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

1. Field of the Invention

The present invention relates to a control device for an automatic clutch, and in particular relates to enhancing the controllability of such a control device.

2. Description of the Related Art

For a clutch comprising a diaphragm spring which biases a friction clutch unit in an engagement direction and a release mechanism which operates the friction clutch unit in the release direction by decreasing the biasing force of the diaphragm spring acting upon the friction clutch unit, it is per se known to provide an automatic clutch device which operates automatically by controlling this release mechanism with an oil pressure actuator and an electronic control device or the like. For example, in Japanese Patent Publication No. JP-A-2004-286191, which is related to a control device for an automatic clutch, there is disclosed a technique for, at low temperature, making the temperature of the working oil more uniform by circulating the working oil in an appropriate manner within the oil pressure actuator.

With an automatic clutch, working oil which constitutes a drive source is supplied to the actuator which releases and engages the clutch, or is discharged therefrom, via a solenoid valve. The flow amount of the working oil through this solenoid valve is determined by the pressure difference between the pressure on the upstream side of the solenoid valve and the pressure on its downstream side, and by the opening area of the valve. The above described pressure upon the upstream side is an accumulator pressure which is stored in an accumulator, while the pressure upon the downstream side is obtained by dividing the reaction force which operates upon the release mechanism supports the diaphragm spring by the cross sectional area of the actuator.

Now, with the diaphragm spring type clutch described in Japanese Patent Publication No. JP-A-2004-286191, there is provided a construction in which, corresponding to the displacement by the release mechanism of the inner circumferential side of the diaphragm spring toward the pressure application side or towards the release side, centered upon a fulcrum which is provided upon the clutch cover, a pressure plate which is provided upon its outer circumferential side is released or is engaged. In this construction, the fulcrum of the diaphragm spring is positioned at the outer centrifugal side in the radial direction and the center of gravity of the diaphragm spring is positioned at the center side in the radial direction with respect to this fulcrum. Furthermore, the diaphragm spring is somewhat inclined with respect to the radial direction, so that when, in this state, the rotational speed of the engine becomes high, centrifugal force operates in the radial direction, since the diaphragm spring also is rotated in the same manner. The reaction force of this release mechanism is principally determined by the characteristics of the diaphragm spring. However, more precisely, the reaction force of the release mechanism is changed dynamically by the centrifugal force, and, in order to control the torque which the clutch transits precisely, i.e. at high accuracy, it is necessary to take this dynamic change into account.

International application WO 2007/022889 discloses a device for actuating a diaphragm spring clutch for vehicles by means of a pneumatic hydraulic or electric actuator. A regulator is mounted upstream of the actuator and provides a control variable for triggering the actuator. The regulator is used to compensate the non-linearity of the force across the release path of the diaphragm spring. The shape of the characteristic curve of the regulator is designed such that the non-linear course of the releasing force is at least nearly compensated by triggering the actuator in an adequately synchronized manner so that the releasing force remains substantially constant across the entire release path. WO 2007/022889 claims a priority date of 24 August 2005, and was published on 1 March 2007.

Japanese application JP 59 212529A provides relief of counter-load in a clutch mechanism using a simple construction by allowing a fly wheel installed between a clutch piston and a clutch outer to push open a read valve installed at the clutch piston when a counter-load is applied and therefore reduces the pressure in the oil pressure chamber.

US 4,591,038 describes an automatic clutch control system for use in automobiles that uses a microcomputer. Included in the system are an accelerator pedal, sensor for detecting accelerator position, an engine speed sensor for detecting engine speed, a clutch stroke sensor for detecting clutch stroke and an automobile speed sensor for detecting automobile speed. The automatic clutch control system can automatically control the clutch moving time and clutch moving speed by using a controller provided in the microcomputer for controlling opening or closing of solenoid valves, gear change of a transmission and opening or closing of a throttle actuator, based on predetermined stored data and based on signals transmitted from sensors.

SUMMARY OF THE INVENTION

The object of the present invention is to provide a control device and a control method for an automatic clutch, which take into account the influence of the centrifugal force which operates upon the diaphragm spring due to the rotation of the engine.

A first aspect of the present invention is a control device for an automatic clutch, comprising: a circular plate shaped diaphragm spring which biases a friction clutch unit in an engagement direction, a release bearing which displaces the position of an inner circumferential portion of the diaphragm spring in its axial direction, thus operating the friction clutch unit in a release direction; a clutch actuator which drives the release bearing in its axial direction; and clutch control means which controls the engagement force of the automatic clutch by driving the release bearing and outputting actuation force according to a clutch stroke determined in advance from the clutch actuator; characterized in that the clutch control means comprises compensation means which compensates the actuation force based upon centrifugal force which acts upon the diaphragm spring, which compensation means calculates a compensation value based upon an attitude related value which is related to a tilt angle of the diaphragm spring and upon an angular velocity value related to the rotational speed of the diaphragm spring.

By compensating the actuation force based upon the centrifugal force which is generated by the rotation of the diaphragm spring, an embodiment of the invention is able to anticipate enhancement of the controllability of the clutch actuator, and, as a result, to anticipate enhancement of the controllability of the clutch. The compensation amount can be calculated using the attitude related value which is related to the tilt value of the diaphragm spring and the rotational speed of the diaphragm spring.

In an example embodiment, the clutch actuator can be a fluid pressure type actuator which drives the release bearing in its axial direction via a lever, and for the compensation means to calculate a compensated applied fluid pressure to be supplied to the fluid pressure type clutch actuator.

In such an example embodiment, it is possible to enhance the controllability of the clutch by compensating the fluid pressure of the clutch actuator by, for example, a solenoid valve.

In a particular example embodiment: a rotational speed sensor detects the rotational speed of the diaphragm spring, and a clutch stroke sensor detects the clutch stroke; the compensation means includes a tilt angle calculation means which calculates the tilt angle of the diaphragm spring, based upon the clutch stroke which has been detected by the clutch stroke sensor; and a load increment calculation means calculates a load increment in the reaction force direction due to centrifugal force which acts upon the diaphragm spring, based upon the tilt angle of the diaphragm spring which has been calculated by the tilt angle calculation means and upon the rotational speed of the diaphragm spring which has been detected by the rotational speed sensor; a compensation amount offset by the load increment which has been calculated by the load increment calculation means being calculated and added to the actuation force.

In this particular example embodiment, it is possible to calculate the tilt angle of the diaphragm spring based upon the stroke amount which has been detected by the clutch stroke sensor, and it is possible to calculate the load increment in the direction of the reaction force due to the centrifugal force which operates upon the diaphragm spring, based upon the tilt angle of that diaphragm spring, and the rotational speed of the diaphragm which has been detected by the rotational speed sensor. It is possible to obtain an actuation force which takes into account the influence of the centrifugal force by calculating a compensation amount for offsetting this load increment in the reaction force direction, and by adding it to the actuation force. Furthermore, since the compensation amount is calculated based upon the tilt angle, the controllability is also compensated even if the clutch has become worn.

A second aspect of the present invention is a control method for an automatic clutch, comprising: a circular plate shaped diaphragm spring which biases a friction clutch unit in an engagement direction; a release bearing which displaces the position of an inner circumferential portion of the diaphragm spring in its axial direction, thus operating the friction clutch unit in a release direction; a clutch actuator which drives the release bearing in its axial direction; and the control method comprising controlling the engagement force of the automatic clutch by driving the release bearing and outputting actuation force according to a clutch stroke determined in advance from the clutch actuator; characterized by compensating the actuation force based upon centrifugal force which acts upon the diaphragm spring, which compensating comprises calculating a compensation value based upon an attitude related value which is related to a tilt angle of the diaphragm spring and upon an angular velocity value related to the rotational speed of the diaphragm spring.

BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:

Fig. 1 is a sectional view for explanation of the structure of an automatic clutch 10 which is an embodiment of the present invention;
Fig. 2 is a structural diagram showing an oil pressure unit which operates a release cylinder in a simplified manner;
Fig. 3 is a figure showing the relationship between the release load which is required when a release bearing is pushing upon a diaphragm spring and the stroke of the release bearing;
Fig. 4 is a conceptual figure for explanation of a release increase load which is generated when the diaphragm spring is rotated;

Fig. 5 is a functional block diagram for explanation of the essentials of the control function of an electronic control device; and

Fig. 6 is a flow chart showing the operation of the control device when the release increase load is taken into consideration.

## DETAILED DESCRIPTION OF THE PREFERRED EMBODIMENTS

In the following, an embodiment of the present invention will be described in detail with reference to the drawings.

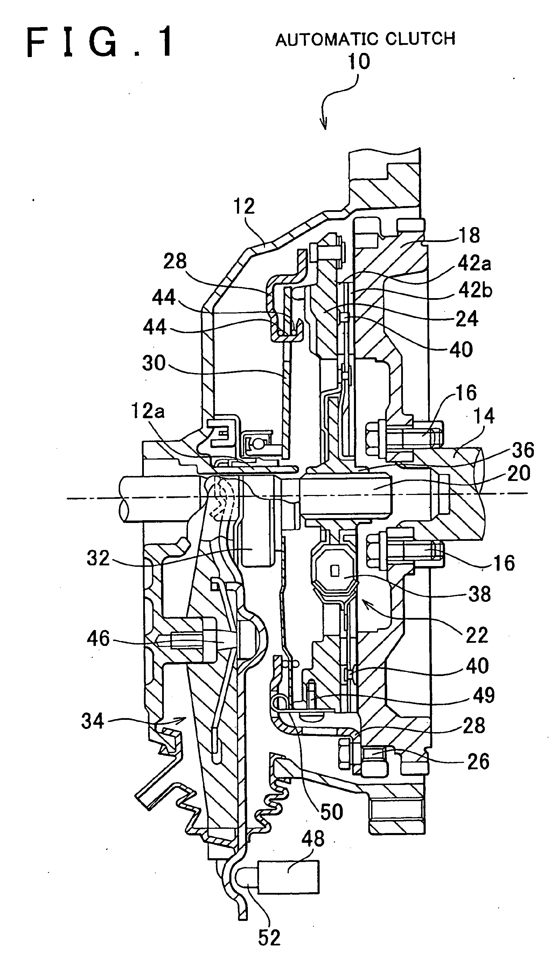

Fig. 1 is a sectional view for explanation of the structure of an automatic clutch 10 which is an embodiment of the present invention. This automatic clutch 10 is disposed between an engine and a speed change mechanism, neither of which is shown in the figure, and is for transmitting the power which is generated by the engine to the speed change mechanism, or disconnecting that power from the speed change mechanism. The automatic clutch 10 is housed within a clutch housing 12 which covers it, and comprises: a circular plate shaped flywheel 18 which is connected by a plurality of bolts 16 to a crank shaft 14 linked to the engine not shown in the figure (on the right side of Fig. 1); a clutch disk 22 which is fitted by splines to an end portion of an input shaft of the speed change mechanism not shown in the figures; a pressure plate 24 which is provided adjacent to the clutch disk 22, for exerting pressure upon that clutch disk 22, and which is freely shiftable in the axial direction; a clutch cover 28 which is fixed by bolts 26 to the outer peripheral portion of the flywheel 18; a circular plate shaped diaphragm spring 30 which biases the pressure plate 24 towards the clutch disk 22; a release bearing 32 which contacts against the inner peripheral edge of this diaphragm spring 30, and can shift in the axial direction; and a release lever 34 for shifting this release bearing 32 in its axial direction.

The clutch disk 22 comprises: a disk hub 36 whose inner circumferential portion is fitted by splines to the input shaft 20, and which can shift in the axial direction; a damper spring 38 for mitigating the rotation shock when the clutch is engaged; and a plate side facing 42a and a wheel side facing 42b, which are friction members riveted by rivets 40 to both sides of the outer peripheral portion of the clutch disk 22. This clutch disk 22 transmits the power of the engine to the input shaft 20 of the speed change mechanism by the frictional force between the flywheel 18 and the wheel side facing 42b, and the frictional force between the pressure plate 24 and the plate side facing 42a. It should be understood that the clutch disk 22 and the flywheel 18 and the pressure plate 24 for sandwiching it may be considered as being the "friction clutch unit" of the Claims.

The diaphragm spring 30 is supported by being sandwiched between two pivot rings 44 that are retained upon the clutch cover 28, and is freely rotatable around its contact point with the pivot rings 44 as a center. Furthermore, the outer peripheral portion of the diaphragm spring 30 biases the pressure plate 24 in the direction to engage the friction clutch unit, while, on the other hand, at the inner peripheral portion of the diaphragm spring 30, one end of a release bearing 32 is contacted against it. Furthermore, at the outer peripheral portion of the pressure plate 24, there are provided a plurality of retracting springs 50 fixed by bolts 49 around the circumferential direction.

The release bearing 32 is provided upon a sleeve 12a which extends from the clutch housing 12 parallel to the axis so as to be able to slide thereupon, and is a device for operating the automatic clutch 10 in its release direction by displacing the position of the inner peripheral portion of the diaphragm spring 30 in the axial direction. Along with the inner circumferential portion of the diaphragm spring 30 being contacted against one end of this release bearing 32 as described above, one end portion of a release lever 34 is contacted against its other end. By varying the position of this release bearing 32 in the axial direction, the diaphragm spring 30 rotates about its contact point with the pivot rings 44 as a fulcrum. It should be understood that the release lever 34 is a device for shifting the release bearing 32 in its axial direction; it may also be considered as being the "lever" of the Claims.

The release lever 34 is fitted in a rotatable manner to the support member 46 as a fulcrum, which is fixed to the clutch housing 12, and a release cylinder 48 which will be described hereinafter is provided at the other end of this release lever 34. By a piston 52 of this release cylinder 48 shifting in the axial direction, the release lever 34 is rotated around the support member 46 as a fulcrum, and the release bearing 32 is driven along the axial direction. It should be understood that the release cylinder 48 may also be considered as being the "clutch actuator" of the Claims.

With the automatic clutch 10 of this structure, when the piston 52 of the release cylinder 48 does not press the release lever 34, since the release lever does not shift the release bearing 32, the release bearing 32 does not press against the inner circumferential portion of the diaphragm spring 30. Due to this, the diaphragm spring 30 comes to bias the pressure plate 24 towards the side of the clutch disk 22, in other words to the engagement side, and, due to the frictional force between the flywheel 18 and the wheel side facing 42b, and the frictional force between the pressure plate 24 and the plate side facing 42a, these members are all mutually engaged together. Because of this, the output of the flywheel 18 is transmitted to the input shaft 20 via the disk hub 36 of the clutch disk 22.

Furthermore, when the other end of the release lever 34 is pressed by the piston 52 of the release cylinder 48, the release lever 34 is rotated about the support member 46 as a center. Due to this, the one end of the release lever 34 shifts towards the side of the crank shaft 14, and the release bearing 32 is shifted along therewith, and presses upon the inner circumferential portion of the diaphragm spring 30, and the inner circumferential portion of the diaphragm spring 30 is shifted towards the side of the crank shaft 14. At this time, the outer peripheral portion of the diaphragm spring 30 moves backward around the contact point with the pivot rings 44 as a fulcrum, and, via the retracting spring 50, the diaphragm spring 30 is shifted in the direction to remove the pressure plate 24 away from the clutch disk 22, so that the engagement of the clutch is released.

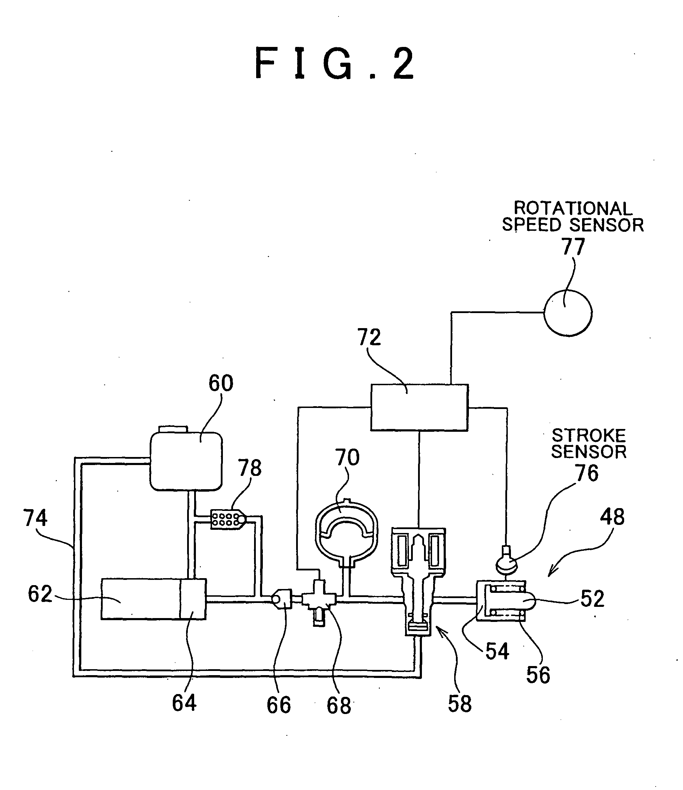

Fig. 2 is a structural diagram showing, in a simplified manner, an oil pressure unit which operates the release cylinder 48 described above. The release cylinder 48 is a fluid pressure type actuator, and drives the release bearing 32 in the axial direction, via the release lever 34. By working oil being supplied into an oil chamber 54 which is defined within the release cylinder 48, a piston 52 of this release cylinder 48 executes its stroke against the resistance of the biasing force of a spring 56 provided within the release cylinder 48 which biases the piston 52 in the direction to cancel its stroke. This working oil which is supplied to the release cylinder 48 is supplied after being pressure regulated by a clutch solenoid valve 58. The working oil which is stored in the oil tank 60, after having been pressurized by a pump 64 which is driven by a motor 62, is accumulated in an accumulator 70 via a non return valve 66 and an oil pressure sensor 68 which detects the pressure thereof, and is then supplied to the clutch solenoid valve 58 as a source pressure. The clutch solenoid valve 58 is controlled by an electronic control device 72, and circulates the working oil which is drained by pressure regulation to the oil tank 60 via an oil drain conduit 74. Furthermore, the stroke amount of the release cylinder 48 is sequentially detected by a stroke sensor 76. It should be understood that a relief valve 78 is provided between the oil tank 60 and the non return valve 66, and this prevents the pressure of the working oil rising above a predetermined pressure.

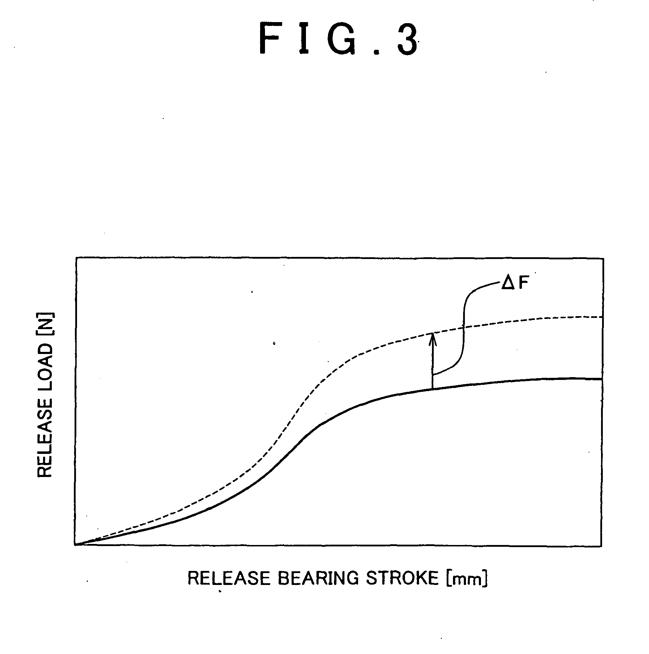

Fig. 3 is a figure showing the relationship between a release load F, which is the reaction force loading generated when the release bearing 32 pushes upon the diaphragm spring 30, and the stroke amount of the release bearing 32. As shown in Fig. 3, as the shift amount (the stroke amount) of the release bearing 32 becomes larger, the release load F which is generated also becomes larger. Here, the graph shown by the solid line shows the relationship in the state in which the diaphragm spring 30 is stationary, in other words in which the rotational speed is zero, while the graph shown by the broken line shows the relationship when the diaphragm spring 30 is rotating at a constant rotational speed. When the diaphragm spring 30 is rotating, a release increase load $\Delta F$ is generated based upon the centrifugal force which is acting upon the diaphragm spring 30.

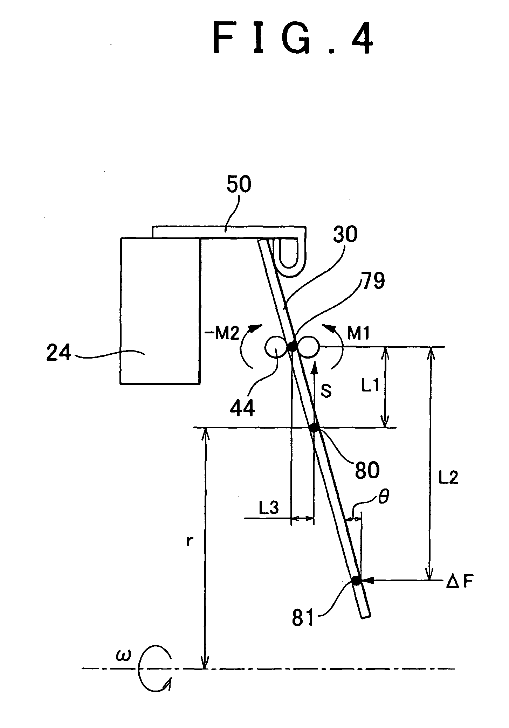

Fig. 4 is a conceptual figure for explanation of a release increase load $\Delta F$ which is generated based upon the centrifugal force when the diaphragm spring 30 is rotated. The diaphragm spring 30, is disposed in a cone shape, thus being tilted with respect to the radial direction, and is supported upon its contact point 79 with the two pivot rings 44 so as to be rotatable therearound. The outer peripheral portion of this diaphragm spring 30 is engaged to the retracting spring 50 which is fixed to the pressure plate 24. The load, which is exerted upon the inner circumferential portion of the diaphragm spring 30, via the outer peripheral portion of the diaphragm spring 30 and the retracting spring 50 in order to shift the pressure plate 24 in its axial direction is termed the release load F. It should be understood that the release increase load $\Delta F$ may be considered as being the "load increment" of the Claims. Moreover, radial slits are formed in the diaphragm spring 30 extending outward from its center towards its outer periphery, so that the diaphragm spring 30 may be considered as consisting of a plurality of levers which is separated by these slits.

Here, when the diaphragm spring 30 is rotated by the rotation of the engine, centrifugal force S operates upon the center of gravity 80 of the diaphragm spring 30, and this centrifugal force S may be expressed by Equation (1). A moment M1 is generated by this centrifugal force S at the contact point 79 of the diaphragm spring 30, as expressed by Equation (2). When a moment M2 in the opposite direction to this moment M1 is imparted by the release increase load $\Delta F$ in order to counter the influence of this moment M1, this moment M2 may be expressed by Equation (3). Here, the moments M1 and M2 are mutually balanced as shown by Equation (4). When Equations (2) and (3) are substituted into Equation (4), the release increase load $\Delta F$ is given by Equation (5). Furthermore, if the angle of fitting of the diaphragm spring 30 is taken as being $\theta$, then, since $\tan \theta$ is given by (L3/L1), accordingly Equation (5) can also be expressed as Equation (6). Here, m is the mass of one of the levers into which the diaphragm spring 30 is divided by the slits, and r is the radial distance between the central axis of the rotation shaft and the center of gravity 80 of the diaphragm spring 30, while $\omega$ is the angular velocity, L1 is the distance in the radial direction between the contact point 79 of the diaphragm spring 30 and its center of gravity 80, L2 is the distance in the radial direction between the contact point 79 of the diaphragm spring 30 and the point of operation 81 at which the release increase load $\Delta F$ acts, L3 is the distance in the axial direction between the contact point 79 of the diaphragm spring 30 and its center of gravity 80, and n is the number of levers into which the diaphragm spring 30 is divided by the slits which are formed therein.

$$S = m r \omega^2 \cdots \cdots (1)$$

$$M1 = S \times n \times L3 = m r \omega^2 \times n \times L3 \cdots \quad (2)$$

$$M2 = -\Delta F \times L2 \cdots \quad (3)$$

$$M1 = -M2 \cdots \cdots \quad (4)$$

$$\Delta F = m r \omega^2 \times n \times (L3/L2) \cdots \cdots \quad (5)$$

$$\Delta F = m r \omega^2 \times n \times \tan \theta \times (L1/L2) \cdots \quad (6)$$

According to Equation (6), the release increase load $\Delta F$ which is required, along with increasing in proportion to the second power of the angular velocity $\omega$, also increases in proportion to the angle $\theta$ of fitting. This release increase load $\Delta F$ is the amount of elevation from the solid line to the broken line in Fig. 3. In the graph, the broken line shifts upward along with increase of the rotational speed, while it touches the solid line when the rotational speed is small.

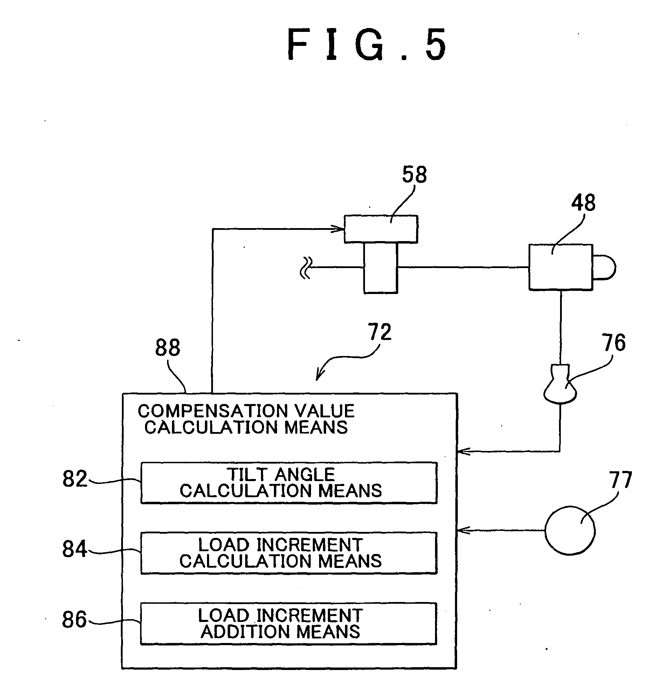

Fig. 5 is a functional block diagram for explanation of the essentials of the control function of the electronic control device 72. In Fig. 5, a tilt angle calculation means 82 calculates the angle of fitting $\theta$ of the diaphragm spring 30, based upon the stroke amount detected by a stroke sensor 76 which is provided to the release cylinder 48. And a load increment calculation means 84 is a device for calculating the release increase load $\Delta F$, and it calculates the release increase load $\Delta F$ from the Equation (6) described above, based upon the angle of fitting $\theta$ of the diaphragm spring 30 calculated by the tilt angle calculation means 82, and upon the angular velocity $\omega$ calculated based upon the output of a rotational speed sensor 77 which is provided to the engine. And a load increment addition calculation means 86 compensates the release load F in consideration of centrifugal force of the diaphragm spring 30, by adding a basic release characteristic load which is stored in advance in the electronic control device 72 and will be described hereinafter, to the release increase load $\Delta F$ which has been calculated by the load increment calculation means 84. Furthermore, a compensation value calculation means 88, which includes the tilt angle calculation means 82, load increment calculation means 84, and load increment addition calculation means 86, calculates the oil pressure to be supplied to the oil chamber 54 of the release cylinder 48 of Fig. 2, from the release load F which has been calculated by the load increment addition calculation means 86.

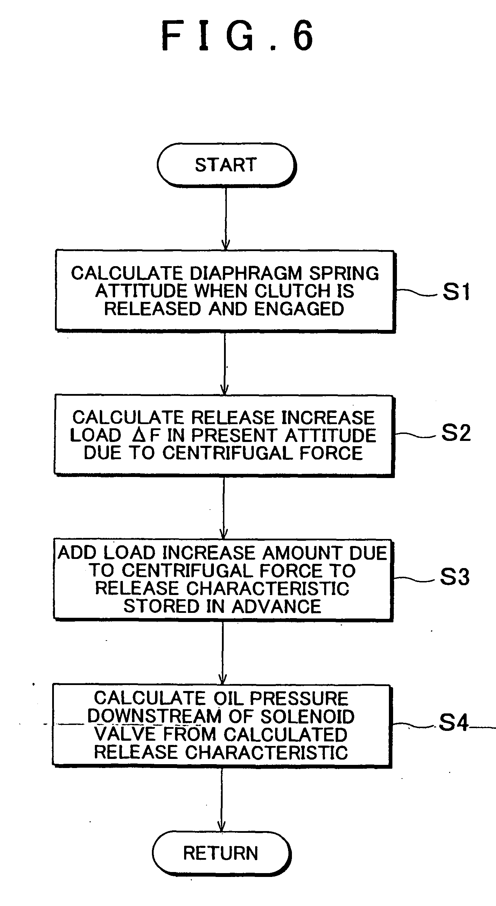

Fig. 6 is a flow chart showing the operation of the essential part of the control operation of the electronic control device 72, for taking into consideration the release increase load $\Delta F$ described above. First, in a step S1, the fitting attitude of the diaphragm spring 30 when the clutch is disengaged and engaged is calculated. In concrete terms, the fitting angle $\theta$ of the diaphragm spring 30 in the present attitude is calculated. Here, since there is a one-to-one relationship between the stroke amount of the piston 52 of the release cylinder 48 and the fitting angle $\theta$ of the diaphragm spring 30, accordingly the stroke amount is detected by the stroke sensor 76, and the fitting angle $\theta$ is calculated from a correlation relationship between the stroke amount and the fitting angle which has been stored in advance in the electronic control device 72. It should be understood that this step S1 may be considered as the "tilt angle calculation means" of the Claims, and the fitting angle $\theta$ may be considered as the "tilt angle" and the "attitude related value" of the "diaphragm spring" of the Claims.

Next, in a step S2, based upon the fitting angle $\theta$ calculated in the step S1 and the angular velocity $\omega$ which is calculated based upon the rotational speed detected by the rotational speed sensor 77 of Fig. 2 fitted to the engine (not shown in Fig. 2), the release increase load $\Delta F$ due to centrifugal force in the present attitude of the diaphragm spring 30 is calculated. Here, the release increase load $\Delta F$ is calculated according to the previously described Equation (6). Furthermore, the various parameters such as the mass m of the diaphragm spring 30 and the like are stored in the electronic control device 72 in advance. It should be understood that it would also be acceptable to consider this step S2 as the "load increment calculation means" of the Claims.

Next, in a step S3, the release increase load $\Delta F$ calculated in the above step S2 is added to the basic release characteristic load which is stored in advance. Here, this basic release characteristic load which is stored in advance is the release load when the diaphragm spring 30 is not rotating, as shown by the solid line in Fig. 3, and is stored in advance in the electronic control device 72. By adding the release increase load ΔF to this basic release characteristic load which is stored in advance, the release load F shown by the broken line in Fig. 3 is calculated. It should be understood that it would also be acceptable to consider this step S3 as the "load increase addition means" of the Claims.

In a step S4, the required oil pressure downstream of the clutch solenoid valve 58 is calculated based upon the release load F which has been added to in the previous step S3. In concrete terms, since in this embodiment the release load F is the reaction force which is generated when shifting the release bearing 32 in its axial direction, accordingly this release load F is converted into a load to be generated at the piston 52 of the release cylinder 48, based upon the condition of equilibrium of the moments upon the release lever 34, about the support member 46 as a fulcrum. And the oil pressure within the oil chamber 54, in other words the oil pressure downstream of the clutch solenoid valve 58, is calculated by dividing the load which has been converted in this manner by the pressure receiving area of the oil chamber 54 of the release cylinder 48. And the clutch solenoid valve 58 is controlled by the electronic control device 72 , so that this oil pressure which has thus been calculated is obtained. In this embodiment, the calculation of this oil pressure is performed repeatedly, between from when the automatic clutch 10 is disengaged to when it is engaged, or between from when it is engaged to when it is disengaged, and the clutch solenoid valve 58 is controlled by repeatedly calculating the optimum oil pressure. It should be understood that it would also be acceptable to consider these steps S1 through S4 as a compensation value calculation means.

According to this embodiment, by calculating the release increase load ΔF based upon the centrifugal force which is generated by the rotation of the diaphragm spring 30, it is possible to anticipate enhancement of the accuracy of calculation of the flow amount of the clutch solenoid valve 58, so that it is possible, as a result, to anticipate enhancement of the controllability of the clutch.

Furthermore, according to this embodiment, by calculating the fitting angle 9 of the diaphragm spring 30 and the angular velocity ω of the diaphragm spring 30, it becomes possible to calculate the release increase load ΔF.

Moreover, according to this embodiment, it is possible to calculate the fitting angle θ of the diaphragm spring 30 based upon the stroke amount which has been detected by the stroke sensor 76, so that it is possible to calculate the release increase load ΔF due to the centrifugal force which is acting upon the diaphragm spring 30, based upon the fitting angle θ of the diaphragm spring 30, and the angular velocity of the diaphragm spring 30 which has been detected by the rotational speed sensor 77. By adding the release increase load ΔF which has been calculated in this manner to the basic release characteristic load, a release load F is obtained which takes into account the influence of centrifugal force. And, by controlling the clutch solenoid valve 58 based upon this release load F, it becomes possible to enhance the controllability of the clutch.

Although an embodiment of the present invention has been explained in detail with reference to the drawings, the present invention could also be applied in other ways.

For example although, in the embodiment described above, the release increase load ΔF was calculated from the angular velocity ω and the fitting angle θ and so on as parameters, it would furthermore be possible to calculate the release increase load ΔF with even better accuracy by additionally considering, as parameters, the rigidity of the clutch cover and the amount of wear upon the clutch disk.

It should be understood that the embodiment described above is only one possibility; a person of skill in the relevant art would be able to make various changes and improvements to the present invention, without departing from its gist.

## Claims

1. A control device for an automatic clutch, comprising:

  a circular plate shaped diaphragm spring (30) which biases a friction clutch unit in an engagement direction;
  a release bearing (32) which displaces the position of an inner circumferential portion of the diaphragm spring (30) in its axial direction, thus operating the friction clutch unit in a release direction;
  a clutch actuator (48) which drives the release bearing (32) in its axial direction; and
  clutch control means (72) which controls the engagement force of the automatic clutch by driving the release bearing (32) and outputting actuation force according to a clutch stroke determined in advance from the clutch actuator (48);
  **characterized in that** the clutch control means (72) comprises compensation means which compensates the actuation force based upon centrifugal force which acts upon the diaphragm spring, which compensation means calculates a compensation value based upon an attitude related value which is related to a tilt angle (θ) of the diaphragm spring (30) and upon an angular velocity value (ω) related to the rotational speed of the diaphragm spring (30).

**2.** A control device for an automatic clutch according to claim 1, wherein:

the clutch actuator (48) is a fluid pressure type actuator which drives the release bearing (32) in its axial direction via a lever (34); and

the compensation means calculates a compensated applied fluid pressure to be supplied to the fluid pressure type clutch actuator.

**3.** A control device for an automatic clutch according to claim 1 or claim 2, further comprising:

a rotational speed sensor (77) which detects the rotational speed of the diaphragm spring (30);

a clutch stroke sensor (76) which detects the clutch stroke;

tilt angle calculation means (82) which calculates the tilt angle of the diaphragm spring (30), based upon the clutch stroke which has been detected by the clutch stroke sensor (76); and

load increment calculation means (84) which calculates a load increment in the reaction force direction due to centrifugal force which acts upon the diaphragm spring (30), based upon the tilt angle ($\theta$) of the diaphragm spring (30) which has been calculated by the tilt angle calculation means (82) and upon an angular velocity value ($\omega$) related to the rotational speed of the diaphragm spring (30) which has been detected by the rotational speed sensor (77); wherein:

the compensation means calculates a compensation amount offset by the load increment which has been calculated by the load increment calculation means (84), and adds it to the actuation force for the clutch actuator (48).

**4.** A control device for an automatic clutch according to any one of claims 1 to 3, wherein the compensation means calculates larger compensation values as the rotational speed of the diaphragm spring (30) increases.

**5.** A control method for an automatic clutch, comprising:

a circular plate shaped diaphragm spring (30) which biases a friction clutch unit in an engagement direction;

a release bearing (32) which displaces the position of an inner circumferential portion of the diaphragm spring (30) in its axial direction, thus operating the friction clutch unit in a release direction; and

a clutch actuator (48) which drives the release bearing (32) in its axial direction;

the control method comprising controlling the engagement force of the automatic clutch by driving the release bearing (32) and outputting actuation force according to a clutch stroke determined in advance from the clutch actuator (48);

**characterized by** compensating the actuation force based upon centrifugal force which acts upon the diaphragm spring (30), which compensating comprises calculating a compensation value based upon an attitude related value which is related to a tilt angle ($\theta$) of the diaphragm spring (30) and upon an angular velocity value ($\omega$) related to the rotational speed of the diaphragm spring (30).

**6.** The control method of claim 5 wherein the control method comprises the steps of:

detecting the stroke of the clutch;

calculating the tilt angle ($\theta$) of the diaphragm spring, based upon the clutch stroke which has been detected;

detecting the rotational speed of the diaphragm spring;

calculating a load increment in the reaction force direction due to centrifugal force which acts upon the diaphragm spring, based upon the tilt angle of the diaphragm spring, and upon an angular velocity value ($\omega$) related to the rotational speed of the diaphragm spring;

calculating a compensation amount offset by the load increment and adding it to the actuation force for the clutch actuator; and

actuating the clutch actuator based upon the actuation force for the clutch actuator to which the compensation amount has been added.

**Patentansprüche**

**1.** Steuerungsvorrichtung für eine automatische Kupplung, die Folgendes aufweist:

eine kreisplattenförmige Membranfeder (30), die eine Reibungskupplungseinheit in eine Eingriffsrichtung drängt;
ein Freigabelager (32), das die Position eines Innenumfangsabschnitts der Membranfeder (30) in seiner axialen Richtung verschiebt, wodurch die Reibungskupplungseinheit in eine Freigaberichtung betätigt wird;
ein Kupplungsstellglied (48), das das Freigabelager (32) in seiner axialen Richtung antreibt; und
eine Kupplungssteuerungseinrichtung (72), die die Eingriffskraft der automatischen Kupplung durch Antreiben des Freigabelagers (32) und Ausgeben einer Betätigungskraft gemäß einem Kupplungshub, der im Voraus von dem Kupplungsstellglied (48) bestimmt wird, steuert;
**dadurch gekennzeichnet, dass** die Kupplungssteuerungseinrichtung (72) eine Kompensationseinrichtung aufweist, die die Betätigungskraft auf der Grundlage einer Zentrifugalkraft, die auf die Membranfeder wirkt, kompensiert, wobei die Kompensationseinrichtung einen Kompensationswert auf der Grundlage eines eine Stellung betreffenden Werts, der zu einem Neigungswinkel (θ) der Membranfeder (30) zugehörig ist, und eines Winkelgeschwindigkeitswerts (ω) berechnet, der zu der Drehzahl der Membranfeder (30) zugehörig ist.

2. Steuerungsvorrichtung für eine automatische Kupplung nach Anspruch 1, wobei:

   das Kupplungsstellglied (48) ein Stellglied der Fluiddruckbauart ist, das das Freigabelager (32) in seiner axialen Richtung über einen Hebel (34) antreibt; und
   die Kompensationseinrichtung einen kompensierten, aufgebrachten Fluiddruck berechnet, der zu dem Kupplungsstellglied der Fluiddruckbauart zuzuführen ist.

3. Steuerungsvorrichtung für eine automatische Kupplung nach Anspruch 1 oder Anspruch 2, die des Weiteren Folgendes aufweist:

   einen Drehzahlsensor (77), der die Drehzahl der Membranfeder (30) erfasst;
   einen Kupplungshubsensor (76), der den Kupplungshub erfasst;
   eine Neigungswinkelberechnungseinrichtung (82), die den Neigungswinkel der Membranfeder (30) auf der Grundlage des Kupplungshubs, der durch den Kupplungshubsensor (76) erfasst worden ist, berechnet; und
   eine Lastinkrementberechnungseinrichtung (84), die ein Lastinkrement in der Reaktionskraftrichtung aufgrund der Zentrifugalkraft, die auf die Membranfeder (30) wirkt, auf der Grundlage des Neigungswinkels (8) der Membranfeder (30), der durch die Neigungswinkelberechnungseinrichtung (32) berechnet worden ist, und eines Winkelgeschwindigkeitswerts (ω), der zu der Drehzahl der Membranfeder (30) zugehörig ist, die durch den Drehzahlsensor (77) erfasst worden ist, berechnet; wobei:

   die Kompensationseinrichtung ein Kompensationsausmaß, das um das Lastinkrement versetzt ist, das durch die Lastinkrementberechnungseinrichtung (84) berechnet worden ist, berechnet und dieses zu der Betätigungskraft für das Kupplungsstellglied (48) addiert.

4. Steuerungsvorrichtung für eine automatische Kupplung nach einem der Ansprüche 1 bis 3, wobei die Kompensationseinrichtung größere Kompensationswerte berechnet, wenn sich die Drehzahl der Membranfeder (30) erhöht.

5. Steuerungsverfahren für eine automatische Kupplung, die Folgendes aufweist:

   eine kreisplattenförmige Membranfeder (30), die eine Reibungskupplungseinheit in eine Eingriffsrichtung drängt;
   ein Freigabelager (32), das die Position eines Innenumfangsabschnitts der Membranfeder (30) in seiner axialen Richtung verschiebt, wodurch die Reibungskupplungseinheit in eine Freigaberichtung betätigt wird; und
   ein Kupplungsstellglied (48), das das Freigabelager (32) in seiner axialen Richtung antreibt;
   wobei das Steuerungsverfahren ein Steuern der Eingriffskraft der automatischen Kupplung durch Antreiben des Freigabelagers (32) und durch Ausgeben einer Betätigungskraft gemäß einem Kupplungshub, der im Voraus von dem Kupplungsstellglied (48) bestimmt wird, aufweist;
   **gekennzeichnet, durch** Kompensieren der Betätigungskraft auf der Grundlage einer Zentrifugalkraft, die auf die Membranfeder (30) wirkt, wobei das Kompensieren ein Berechnen eines Kompensationswerts auf der Grundlage eines eine Stellung betreffenden Werts, der zu einem Neigungswinkel (θ) der Membranfeder (30) zugehörig ist, und eines Winkelgeschwindigkeitswerts (w), der zu der Drehzahl der Membranfeder (30) zugehörig ist, aufweist.

6. Steuerungsverfahren nach Anspruch 5, wobei das Steuerungsverfahren die folgenden Schritte aufweist:

   Erfassen des Hubs der Kupplung;

Berechnen des Neigungswinkels (θ) der Membranfeder auf der Grundlage des Kupplungshubs, der erfasst worden ist;

Erfassen der Drehzahl der Membranfeder;

Berechnen eines Lastinkrements in der Reaktionskraftrichtung aufgrund einer Zentrifugalkraft, die auf die Membranfeder wirkt, auf der Grundlage des Neigungswinkels der Membranfeder und eines Winkelgeschwindigkeitswerts (ω), der zu der Drehzahl der Membranfeder zugehörig ist,

Berechnen eines Kompensationsausmaßes, das um das Lastinkrement versetzt ist, und Addieren des Ausmaßes zu der Betätigungskraft für das Kupplungsstellglied; und

Betätigen des Kupplungsstellglieds auf der Grundlage der Betätigungskraft für das Kupplungsstellglied, zu der das Kompensationsausmaß addiert worden ist.

## Revendications

1. Dispositif de commande dévolu à un embrayage automatique, comprenant :

   un ressort à diaphragme (30) configuré en une plaque circulaire, qui sollicite une unité d'accouplement par friction dans une direction de venue en prise ;

   une butée de débrayage (32) qui fait varier la position d'une région circonférentielle intérieure dudit ressort à diaphragme (30), dans sa direction axiale, actionnant ainsi ladite unité d'accouplement par friction dans une direction de débrayage ;

   un actionneur d'embrayage (48) qui entraîne ladite butée de débrayage (32) dans sa direction axiale ; et

   un moyen (72) de commande d'accouplement, qui pilote la force de venue en prise de l'embrayage automatique par entraînement de ladite butée de débrayage (32) et la production d'une force de manoeuvre conformément à une course d'embrayage déterminée, à l'avance, depuis ledit actionneur d'embrayage (48) ;

   **caractérisé par le fait que** le moyen (72) de commande d'accouplement comprend un moyen de compensation qui compense la force de manoeuvre sur la base d'une force centrifuge agissant sur le ressort à diaphragme, lequel moyen de compensation calcule une valeur de compensation sur la base d'une valeur de positionnement relative à un angle d'inclinaison (θ) du ressort à diaphragme (30), et sur la base d'une valeur (ω) de vitesse angulaire relative à la vitesse de rotation dudit ressort à diaphragme (30).

2. Dispositif de commande pour embrayage automatique, selon la revendication 1, dans lequel :

   l'actionneur d'embrayage (48) est un actionneur du type à pression de fluide, qui entraîne la butée de débrayage (32) dans sa direction axiale par l'intermédiaire d'un levier (34) ; et

   le moyen de compensation calcule une pression de délivrance de fluide compensée, devant être fournie audit actionneur d'embrayage du type à pression de fluide.

3. Dispositif de commande pour embrayage automatique, selon la revendication 1 ou la revendication 2, comprenant en outre :

   un capteur (77) de vitesse de rotation, qui détecte la vitesse de rotation du ressort à diaphragme (30) ;

   un capteur (76) de course d'embrayage, qui détecte la course de l'embrayage ;

   un moyen (82) de calcul d'angle d'inclinaison, qui calcule l'angle d'inclinaison dudit ressort à diaphragme (30) sur la base de la course d'embrayage qui a été détectée par ledit capteur (76) de course d'embrayage ; et

   un moyen (84) de calcul d'accroissements de charge, qui calcule un accroissement de charge dans la direction de la force de réaction résultant d'une force centrifuge agissant sur le ressort à diaphragme (30), sur la base de l'angle d'inclinaison (θ) dudit ressort à diaphragme (30) qui a été calculé par ledit moyen (82) de calcul d'angle d'inclinaison, et sur la base d'une valeur (ω) de vitesse angulaire relative à la vitesse de rotation dudit ressort à diaphragme (30), qui a été détectée par ledit capteur (77) de vitesses de rotation ; sachant que :

   le moyen de compensation calcule une grandeur de compensation avec décalage par l'accroissement de charge qui a été calculé par ledit moyen (84) de calcul d'accroissement de charge, et l'ajoute à la force de manoeuvre dédiée à l'actionneur d'embrayage (48).

4. Dispositif de commande pour embrayage automatique, selon l'une quelconque des revendications 1 à 3, dans lequel le moyen de compensation calcule des valeurs de compensation plus grandes lorsque la vitesse de rotation du ressort à diaphragme (30) augmente.

**5.** Procédé de commande dévolu à un embrayage automatique, comprenant :

un ressort à diaphragme (30) configuré en une plaque circulaire, qui sollicite une unité d'accouplement par friction dans une direction de venue en prise ;

une butée de débrayage (32) qui fait varier la position d'une région circonférentielle intérieure dudit ressort à diaphragme (30), dans sa direction axiale, actionnant ainsi ladite unité d'accouplement par friction dans une direction de débrayage ; et

un actionneur d'embrayage (48) qui entraîne ladite butée de débrayage (32) dans sa direction axiale ;

ledit procédé de commande englobant un pilotage de la force de venue en prise de l'embrayage automatique par entraînement de ladite butée de débrayage (32) et la production d'une force de manoeuvre conformément à une course d'embrayage déterminée, à l'avance, depuis ledit actionneur d'embrayage (48) ;

**caractérisé par** une compensation de la force de manoeuvre sur la base d'une force centrifuge agissant sur le ressort à diaphragme (30), laquelle compensation englobe le calcul d'une valeur de compensation sur la base d'une valeur de positionnement relative à un angle d'inclinaison ($\theta$) du ressort à diaphragme (30), et sur la base d'une valeur ($\omega$) de vitesse angulaire relative à la vitesse de rotation dudit ressort à diaphragme (30).

**6.** Procédé de commande selon la revendication 5, ledit procédé comprenant les étapes consistant à :

détecter la course de l'embrayage ;

calculer l'angle d'inclinaison ($\theta$) du ressort à diaphragme sur la base de la course d'embrayage qui a été détectée ;

détecter la vitesse de rotation dudit ressort à diaphragme ;

calculer un accroissement de charge dans la direction de la force de réaction, résultant d'une force centrifuge qui agit sur le ressort à diaphragme, sur la base de l'angle d'inclinaison dudit ressort à diaphragme et sur la base d'une valeur ($\omega$) de vitesse angulaire relative à la vitesse de rotation dudit ressort à diaphragme ;

calculer une grandeur de compensation avec décalage par l'accroissement de charge, et l'ajouter à la force de manoeuvre dédiée à l'actionneur d' embrayage ; et

manoeuvrer ledit actionneur d'embrayage sur la base de ladite force de manoeuvre dédiée audit actionneur d'embrayage, et à laquelle ladite grandeur de compensation a été ajoutée.

# FIG.1

AUTOMATIC CLUTCH
10

# FIG.2

ROTATIONAL
SPEED SENSOR
77

STROKE
SENSOR
76

60

72

70

78

74

62

48

52

64    66    68    58    54    56

# F I G . 3

# FIG.4

# F I G . 5

58

48

88

72

76

77

COMPENSATION VALUE
CALCULATION MEANS

82 — TILT ANGLE
CALCULATION MEANS

84 — LOAD INCREMENT
CALCULATION MEANS

86 — LOAD INCREMENT
ADDITION MEANS

# FIG.6

```
        ┌─────────────┐
        │    START    │
        └─────────────┘
               │
               ▼
┌──────────────────────────────┐
│  CALCULATE DIAPHRAGM SPRING   │
│   ATTITUDE WHEN CLUTCH IS     │───  S1
│   RELEASED AND ENGAGED        │
└──────────────────────────────┘
               │
               ▼
┌──────────────────────────────┐
│  CALCULATE RELEASE INCREASE   │
│  LOAD ΔF IN PRESENT ATTITUDE  │───  S2
│   DUE TO CENTRIFUGAL FORCE    │
└──────────────────────────────┘
               │
               ▼
┌──────────────────────────────┐
│ ADD LOAD INCREASE AMOUNT DUE  │
│    TO CENTRIFUGAL FORCE TO    │
│   RELEASE CHARACTERISTIC      │───  S3
│     STORED IN ADVANCE         │
└──────────────────────────────┘
               │
               ▼
┌──────────────────────────────┐
│   CALCULATE OIL PRESSURE      │
│ DOWNSTREAM OF SOLENOID        │───  S4
│  VALVE FROM CALCULATED        │
│  RELEASE CHARACTERISTIC       │
└──────────────────────────────┘
               │
               ▼
        ┌─────────────┐
        │   RETURN    │
        └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004286191 A
- WO 2007022889 A
- JP 59212529 A
- US 4591038 A